# EUROPEAN PATENT SPECIFICATION

(11) **EP 3 753 394 B1**
(45) Date of publication and mention of the grant of the patent: **06.08.2025**
(21) Application number: 19180722.1
(22) Date of filing: 17.06.2019
(51) Int. Cl.: A01F 15/04, A01F 15/08

(54) **IMPROVED BALING MACHINE HYDRAULICS**
VERBESSERTE BALLENPRESSENHYDRAULIK
HYDRAULIQUE AMÉLIORÉE DE MACHINE DE MISE EN BALLES

(43) Date of publication of application: 23.12.2020
(73) Proprietor: CNH Industrial Belgium N.V., 8210 Zedelgem (BE)
(72) Inventor: SYRYN, Wim, 8650 Klerken (BE); VERFAILLIE, Glennys, 8490 Jabbeke (BE); ROSSEEL, Bram, 8490 Snellegem (BE); MONBALIU, Sven, 8377 Zuienkerke (BE); VANPOUCKE, Johan O., 8210 Veldegem (BE)
(74) Representative: CNH Industrial IP Department

(56) References cited:
- WO-A1-2017/005635
- FR-A1- 2 360 413
- US-A- 2 890 646

## Description

### Background of the Invention

The invention relates to agricultural baling machines (*"balers*"), and in particular to improvements in hydraulic sub-systems of such machines. Hydraulic sub-systems are used in baling machines for various purposes. These include the powering of so-called *"density doors"* that are controllably moveable to apply pressure to bales that are in the final stage of being formed. Applying such pressure influences the density of subsequently baled material in accordance with an operator's requirements.

Agricultural harvesting machines, such as balers, are used to consolidate and package crop material (also referred to as *"plant matter"*) so as to facilitate the storage and handling of the crop material for later use.

In the case of hay, a mower-conditioner is typically used to cut and condition the crop material for windrow drying in the sun. In the case of straw, an agricultural combine harvester discharges non-grain crop material from its rear discharge chute, creating windrows of straw (such as wheat or oat straw) which is intended to be picked up by a baling machine.

Cut crop material of the kinds described above typically is raked and dried and a baling machine, such as a large square baler or round baler, is towed behind a tractor in order to straddle and travel along the windrows while picking up the crop material and forming it into bales.

A large square baler includes a pickup unit at the front that gathers the cut and windrowed crop material from the ground. The pickup unit includes a pickup roll, and optionally may include other components such as side shields, stub augers, wind guarding, etc.

A packer unit is used to move the crop material inside the baling machine from the pickup unit to a duct or pre-compression chamber. The packer unit forms a wad of crop, within the pre-compression chamber, which is then transferred to a main bale chamber. Herein the charge of crop material within the pre-compression chamber is termed a *"wad",* and the charge of crop material after being compressed within the main bale chamber is termed a *"flake".* Typically such a packer unit includes packer tines or forks that reciprocate to move the crop material from the pickup unit into the pre-compression chamber. Instead of a packer unit it is also known to use a rotor cutter unit, which chops the crop material into small pieces.

A stuffer unit transfers the wad of crop material in charges from the pre-compression chamber to a main bale-forming chamber that usually is located upwardly rearwardly of the pickup unit and pre-compression chamber. Typically such a stuffer unit includes stuffer forks which reciprocate in an upward, curved locus to move the wad of crop material from the pre-compression chamber to the main bale-forming chamber in timed relation to the reciprocating action of a plunger that is moveably provided within the main bale chamber.

In the main bale chamber the plunger compresses the wad of crop material into flakes to form a bale and, at the same time, gradually advances the bale rearwardly towards the outlet of the bale chamber. The plunger reciprocates back and forth, towards and away from the discharge (rear) end of the baler. The plunger may include a number of rollers, which extend laterally outwardly from the sides of the plunger. The rollers on each side of the plunger are received within respective plunger slots formed in the sidewalls of the bale-forming chamber, with the plunger slots guiding the plunger during the reciprocating movements.

When enough flakes have been added and the bale reaches a full (or other predetermined) size, a number of knotters are actuated which wrap and tie twine, cord or the like around the bale while it is in the main bale-forming chamber. The twine is cut and the formed baled is ejected out of the back of the baler by the action of forming a new bale.

Typically the bale-forming chamber includes a stationary ceiling, floor and a pair of opposing side walls at its upstream (front) end. The stationary ceiling and side walls terminate adjacent to a number of so-called *"density doors",* including in a typical baling machine a top door and two side doors. The density doors may be pivoted about a pivot axis at their upstream (front) end and clamp against a bale formed in a rear part of the bale-forming chamber to hold the bale and provide resistance as a next bale is formed in a forward part of the bale-forming chamber. The pressure exerted by the density doors on the bale controls the density of the subsequently formed bale(s). The required pressure that the density doors must exert to form bales of a particular density varies widely, depending on the crop material that is being baled and the desired density.

The pressure applied by the density doors is adjustable. Depending on the precise design under consideration this may be through operation of controls located on the baling machine, although increasingly commonly such controls are nowadays provided in the cab of the towing tractor.

The density doors are caused by hydraulic actuators to move inwardly and outwardly as desired, in order to adjust the pressure applied. The baling machine includes for this purpose a hydraulic circuit including one or more pumps arranged to pump hydraulic fluid from a reservoir under pressure around a network of hydraulic hoses; a number of control valves; and one or more hydraulic cylinders (actuators) attached to effect movement of the density doors.

FR 2360413 A1 discloses a baling machine including a bale chamber having a pair of side walls, the distance between which can be modified by means of a pair of actuators. A control system operates the actuators according to signals received from a feeler probe. The feeler probe detects any alteration in the amount of friction between the material which is being compressed and the walls of the press chamber. The slope of the side-walls i.e. the amount of convergence of the walls is altered to compensate the friction alteration and to maintain the press force constant.

WO 2017/005635 A1 discloses an agricultural baler having a bale chamber for the compression of crop into bales and including a floor, ceiling and two walls. A plunger forces crop into the bale chamber. An actuator system presses the ceiling and walls of the bale chamber inward. At least one retractable friction block in the ceiling or walls is used to increase the compression and density of the crop. The friction block extends inwards as an increasing function of either decreased pressure being exerted against the ceiling or walls by the crop being baled, or inward displacement of the ceiling or walls by the actuator system.

In the prior art it was known to provide the cylinders as single-acting devices, the terms *"single acting"* and *"double-acting"* being familiar to the person of skill in the art. Single acting cylinders are not particularly sensitive to variations in fluid pressure in the hydraulic circuit.

It is commonplace to locate the valves that form control elements in the hydraulic circuit in a valve mounting that may be a metal block or similar rigid restraint for such components. For reasons of economy in the prior art the valve mounting is located at a front end of a frame forming a major part of the baling machine, adjacent a rotary driveline via which power for the baling machine is transferred from the power take-off of a towing tractor to power e.g. the pump(s) forming part of the hydraulic circuit.

Single-acting hydraulic cylinders are tolerant of such locating of the valve mounting but it is now proposed, as described in European patent application no 18204205.1, to employ double-acting hydraulic actuators for powering movement of the density doors.

Double-acting cylinders offer numerous unexpected advantages but it has been found by the inventors that such cylinders are more sensitive than single-acting cylinders to variations in hydraulic fluid pressure. The distance from the valve mounting to the cylinders resulting from locating the valve mounting at the front of the baling machine tends to create such variations with the result that the performance of the double-acting cylinders is not as good as anticipated.

There is a need to improve the sensitivity of baling machine density door actuators to hydraulic fluid pressure variations.

### Summary of the Invention

The invention beneficially involves locating the valve mounting described above in a manner that minimizes or eliminates the effects of hydraulic fluid pressure variations of the kind to which double-acting cylinders are sensitive.

To overcome the above-mentioned problem a baling machine with the features of claim 1 is suggested. Preferred embodiments are recited by the dependent claims.

Such an arrangement presents the valve mounting much closer to the one or more hydraulic cylinders than in the prior art. As a result when the cylinders are provided as double-acting devices variations in hydraulic fluid pressure advantageously are reduced or eliminated such that the performance of the cylinders is as expected.

Locating the valve mounting close to the cylinder also beneficially shortens the distance from the valve mounting to any pressure sensors associated with the cylinders. The inventors have found that this significantly decreases the time taken by the hydraulic circuit to react to pressure change requirements as may for example result from commands input by the driver of a towing tractor.

In embodiments disclosed herein preferably the at least one bale density door is pivotably secured at its front end relative to the frame. This method of securing the density door(s) is known *per* se and is advantageously suited to the mounting of the double-acting hydraulic cylinder(s).

Conveniently the valve mounting is located no more than 1.5m, measured in a front-rear direction, from the at least one hydraulic cylinder.

Such aspects of locating of the valve mounting have beneficially been found to minimise the hydraulic fluid pressure variations and maximise the response speed of the hydraulic circuit.

Optionally the valve mounting may take the form of or include a metal block defining or supporting on its inside the one or more hydraulic valves. However other forms of valve mounting are possible within the scope of the disclosure hereof.

Further preferably the baling machine includes a plurality of bale density doors that are moveably secured relative to the frame and that are each capable of pressing on a bale inside a said bale-forming chamber. More specifically the baling machine may include a first, upper bale density door that acts downwardly on a bale in a said bale-forming chamber from above and respective second and third side bale density doors that act on the bale respectively from the left and right sides when viewed from the rear of the baling machine looking forwardly.

In such an embodiment conveniently the baling machine includes three double-acting hydraulic cylinders that cause movement of the first bale density door and two double-acting hydraulic cylinders that cause movement of each of the second and third bale density doors respectively. Other numbers and combinations of the hydraulic cylinders however are possible within the scope of the invention.

Preferably the or each hydraulic cylinder includes a fluid-tight, elongate, hollow, cylindrical housing accommodating a piston that is moveable longitudinally in the housing and a rod, secured to one side of the piston and protruding from the housing via an aperture whereby the piston defines a piston side and an oppositely disposed rod side; and wherein the hydraulic circuit is capable of causing the or each hydraulic cylinder to operate:
a. in a first mode in which fluid pressure acts entirely or predominantly on the piston side of the piston to effect movement of the piston in a first direction; or
b. in a second mode in which fluid pressure acts entirely or predominantly on the rod side of the piston to effect movement of the piston in a second direction opposite to the first direction; or
c. in a third mode in which fluid pressure acts equally on the piston and rod sides of the piston and an area difference resulting from the presence of the rod gives rise to a force causing the piston to move in the first direction; or
d. in a fourth mode in which fluid is allowed to flow out of fluid chambers (322A, 322B) on both the piston (324A, 324B) and rod (325A, 325B) sides of the piston (323A, 323B).

Other forms of hydraulic actuator however may be employed in different embodiments of the invention. Furthermore it is not a requirement that all the hydraulic actuators in a baling machine as disclosed herein adopt the same or even similar designs. Combinations of actuator types are possible in one and the same baling machine, as would occur to the person of skill in the art.

According to the invention, the valve mounting includes or supports one or more sensors of hydraulic fluid pressure in the hydraulic circuit. Thereby, it is ensured that the valves supported by the valve mounting and the sensors are close to one another, giving rise to the indicated benefit of short response times of the hydraulic circuit.

In addition to the foregoing optionally the hydraulic circuit includes one or more pump for pressurising fluid and causing it to flow in the hydraulic circuit; and the hydraulic circuit optionally includes one or more valves for preventing exhaustion of fluid pressure in the hydraulic circuit when operation of the one or more pump is interrupted. The one or more valves may be manually operable or electrically operable, optionally with a manual override.

In embodiments the one or more valves preferably is or includes a manually operated ball valve, although other designs of valve may be employed in other embodiments.

The hydraulic circuit may include a plurality of pumps for respectively pressurising fluid such that it is provided at a plurality of different flow rates. The hydraulic circuit may also include one or more valves (such as spool valves) for selectively connecting one of the plurality of pumps to the at least one hydraulic cylinder.

### Brief Description of the Drawings

There now follows a description of preferred embodiments of the invention, by way of non-limiting example, with reference being made to the accompanying drawings in which:
Figure 1 is a perspective cutaway view showing the internal workings of a large square baler;
Figure 2 is a perspective view of the main bale-forming chamber of the baler of Figure 1;
Figure 3A is a schematic view of a fluid supply circuit that is fluidly coupled to fluid cylinders coupled to density doors of the bale-forming chamber illustrated in Figures 1 and 2;
Figure 3B is a schematic view of an alternative arrangement for implementing part of the fluid supply circuit of Figure 3A;
Figure 4 is a top perspective view of a top density door of the bale-forming chamber illustrated in Figures 1 and 2;
Figure 5 is a side perspective view of a side density door of the bale-forming chamber illustrated in Figures 1 and 2;
Figure 6 is a perspective view of a frame of a baling machine such as that visible in Figure 1, showing a prior art location of a valve mounting at a front portion;
Figure 7A is a perspective view of a frame of a baling machine according to the invention;
Figure 7B is an enlargement of part of the Figure 7A embodiment;
Figure 8A is a schematic view of a hydraulic circuit forming part of the Figure 7 embodiment;
Figure 8B illustrates some of the components of Figure 8A in more detail; and
Figure 9 is a plot comparing the hydraulic circuit reaction times of the arrangement of Figures 3 and 6 with the improved reaction times of the embodiment of Figures 7 and 8.

Corresponding reference characters indicate corresponding parts throughout the several views. The exemplifications set out herein illustrate embodiments of the invention, and such exemplifications are not to be construed as limiting the scope of the invention in any manner.

### Detailed Description of the Invention

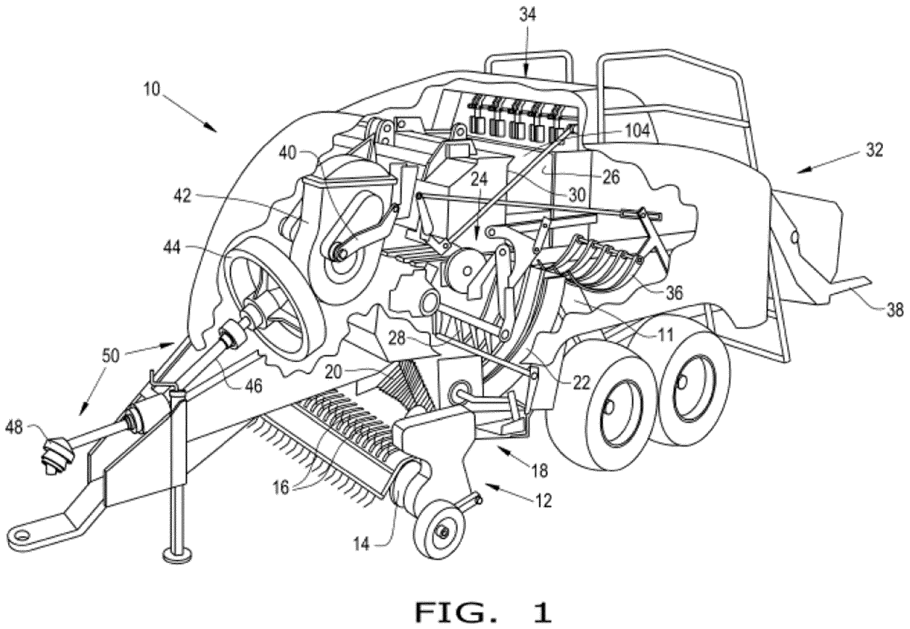

Referring now to the drawings, and more particularly to Figure 1, there is shown a perspective cutaway view showing the internal workings of a large square baler 10 including a chassis or frame 11. The baler 10 includes secured to the frame 11 at least one, and in practice a plurality, of ground engaging members that permit the baling machine to negotiate fields when towed behind a tractor that is omitted from the drawings for ease of understanding. In the illustrated embodiment the ground-engaging members take the form of tyred wheels. This is the most likely form of ground engaging member, although at least in theory other forms are possible and are included within the disclosure hereof.

The baler 10 includes a two stage crop material feeding system. Crop material is lifted from windrows into the baler 10 using a pickup unit 12. The pickup unit 12 includes a rotating pickup roll 14 with tines 16 which move the crop rearwardly towards a packer unit 18. An optional pair of stub augers (one of which is shown, but not numbered) are positioned above the pickup roll 14 to move the crop material laterally inwardly. The packer unit 18 includes packer tines 20 which push the crop into a pre-compression chamber 22 to form a wad of crop material. The packer tines 20 intertwine the crop together and pack the crop within the pre-compression chamber 22. The pre-compression chamber 22 and the packer tines 20 function as the first stage for crop compression.

Once the pressure in the pre-compression chamber 22 reaches a predetermined sensed value, a stuffer unit 24 moves the wad of crop from the pre-compression chamber 22 to a bale chamber 26, which is carried by the chassis 11 and may also be referred to as a *"main bale-forming chamber".*

The stuffer unit 24 includes stuffer forks 28 which thrust the wad of crop directly in front of a plunger 30. Plunger 30 reciprocates within the main bale-forming chamber 26 and compresses the wad of crop into a flake. The stuffer forks 28 return to their original stationary state after the wad of material has been moved into the main bale-forming chamber 26. The plunger 30 compresses the wads of crop into flakes to form a bale and, at the same time, gradually advances the bale from an inlet (front) end 104 of the main bale-forming chamber 26 towards an outlet 32 at the rear of the main bale-forming chamber 26.

The main bale-forming chamber 26 and the plunger 30 function as the second stage for crop compression. When enough flakes have been added and the bale reaches a full (or other predetermined) size, knotters 34 are actuated which wrap and tie twine around the bale while it is still in the main bale-forming chamber 26. Needles 36 bring the lower twine up to the knotters 34 and the tying process then takes place. The twine is cut and the formed bale is ejected from a discharge chute 38 as a new bale is formed.

The plunger 30 is connected via a crank arm 40 with a gear box 42. The gear box 42 is driven by a flywheel 44, which in turn is connected via a drive shaft 46 with a power take-off (PTO) coupler 48. The PTO coupler 48 is detachably connected with the PTO spline at the rear of a traction unit, such as a towing tractor (not shown). The PTO coupler 48, the drive shaft 46 and the flywheel 44 together define a portion of a driveline 50, which provides rotative power to the gearbox 42. The flywheel 44 has a sufficient mass to carry the plunger 30 through a compression stroke as power is applied to the drive shaft 46 by the traction unit (not shown).

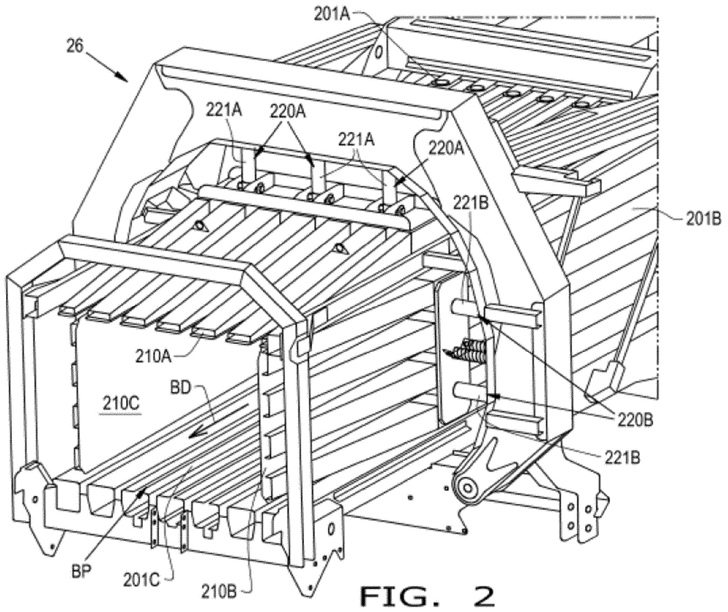

Referring now to Figure 2, a perspective view of the bale chamber 26 is illustrated. The bale chamber 26 generally includes a plurality of stationary walls, which may include a top wall 201A, a pair of opposed side walls 201B, and a stationary bottom wall 201C opposite the top wall 201A. As the bale flows through the bale chamber 26 in a bale forming direction, which is designated by arrow BD, the bale encounters movable density doors 210A, 210B, 210C. In some embodiments, the movable density door 210A is a top density door that is pivotably coupled to a stationary part of the bale-forming chamber 26 so as to form the top wall 201A and the movable density doors 210B and 210C are a pair of side density doors that are each pivotably coupled to a stationary part of the bale-forming chamber 26 so as to form respective side walls 201B. A bale pressing area BP is defined between the density doors 210A, 210B, 210C and the stationary bottom wall 201C where the density doors 210A, 210B, 210C exert a pressure on a bale. The pressure exerted on the bale by the density doors 210A, 210B, 210C holds the bale in place as the plunger 30 compresses the wads of crop into flakes. A greater pressure exerted on the bale by the density doors 210A, 210B, 210C, therefore, results in a more densely packed bale that exits the bale chamber 26.

To adjust the size of the bale pressing area BP, and thus the pressure exerted on the bale by the density doors 210A, 210B, 210C, at least one fluid cylinder 220A, 220B is provided to move the density doors 210A, 210B, 210C. In the illustrated embodiment, the top density door 210A is moved by three fluid cylinders 220A and each of the side density doors 210B, 210C is moved by two fluid cylinders 220B. Each of the fluid cylinders 220A, 220B includes a cylinder rod 221A, 221B that is configured to move one of the density doors 210A, 210B, 210C, as will be described further herein. In some embodiments, the fluid cylinders 220A, 220B are hydraulically powered cylinders supplied with, for example, pressurized oil to extend and retract the cylinder rods 221A, 221B. It should be appreciated that the fluid cylinders 220A, 220B may be powered by fluids other than oil, such as other incompressible fluids, in accordance with the present invention.

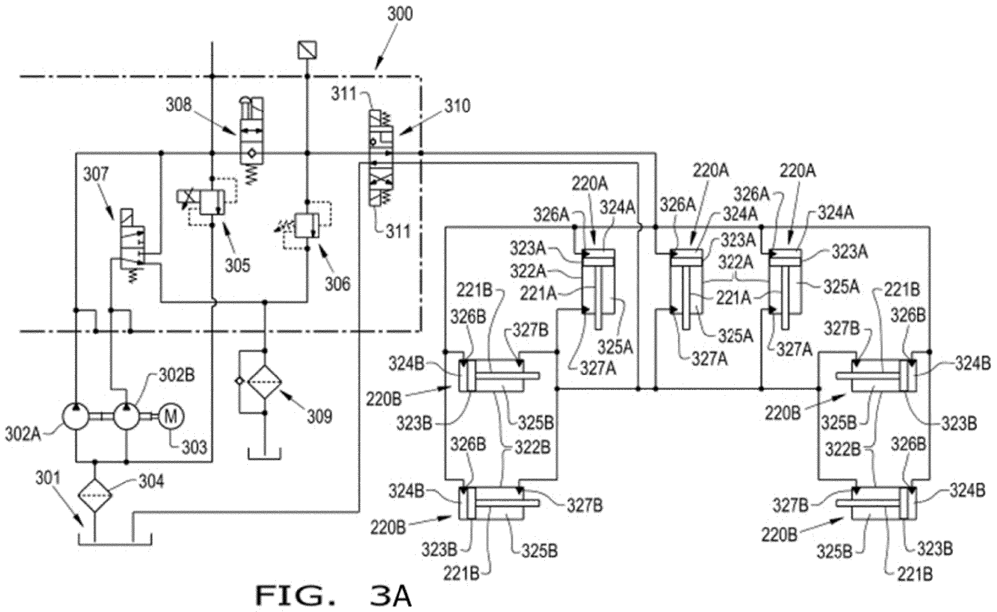

Referring now to Figure 3A, a schematic view is provided that illustrates a (typically but not necessarily hydraulic) fluid supply circuit 300 fluidly coupled to the fluid cylinders 220A, 220B to supply working fluid to the fluid cylinders 220A, 220B. Each of the fluid cylinders 220A, 220B includes a respective fluid chamber 322A, 322B and a piston 323A, 323B disposed in the fluid chamber 322A, 322B. The pistons 323A, 323B separate the fluid chambers 322A, 322B into respective piston sides 324A, 324B and rod sides 325A, 325B, with the cylinder rods 221A, 221B each coupling to a respective piston 323A, 323B on the rod side 325A, 325B of the fluid chamber 322A, 322B. Each of the fluid cylinders 220A, 220B includes a piston fluid port 326A, 326B that fluidly couples the piston side 324A, 324B of the fluid chamber 322A, 322B with the fluid supply circuit 300. Each of the fluid cylinders 220A, 220B also includes a rod fluid port 327A, 327B that fluidly couples the rod side 325A, 325B of the fluid chamber 322A, 322B with the fluid supply circuit 300.

The fluid supply circuit 300, which may be part of or connected to a main fluid circuit of the baler 10, is configured to supply working fluid to the fluid chambers 322A, 322B of the fluid cylinders 220A, 220B to extend or retract the cylinder rods 221A, 221B and move the density doors 210A, 210B, 210C. The fluid supply circuit 300 may include a fluid reservoir 301, which may be filled with a working fluid such as water or oil. One or more pumps 302A, 302B may be fluidly coupled to the fluid reservoir 301 and driven by a motor 303 to pressurize and drive fluid through the fluid supply circuit 300. In some embodiments, a suction screen 304 is disposed between the fluid reservoir 301 and the pumps 302A, 302B. In some embodiments, the fluid supply circuit 300 includes a pressure relief valve 306 (which may be a manual valve) to lessen the risk of excessive pressure developing in the fluid supply circuit 300, a pressure control module 305, and one or more spool valves 307 to direct the flow of fluid in the fluid supply circuit 300. The fluid supply circuit 300 may also include one or more filter 309 to capture contaminants that are entrained in the fluid flow. It should be appreciated that the fluid supply circuit 300 may incorporate additional and/or different elements than those previously described, depending on the operating requirements.

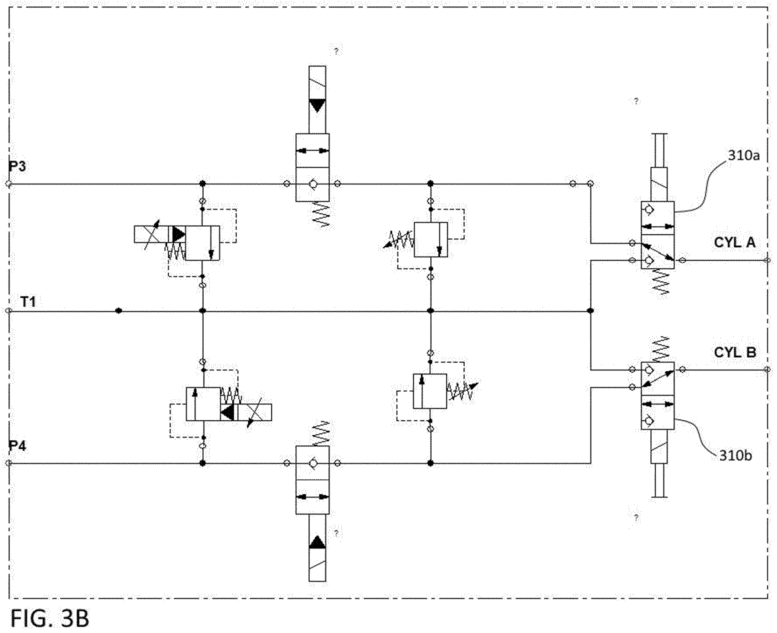

The fluid supply circuit 300 also includes a fluid supply controller 310 that is configured to control the supply of fluid from the fluid supply circuit 300 to the fluid cylinders 220A, 220B. The fluid supply controller 310, which may be a mechanical or electrical controller, is selectively switchable to a first fluid supply mode, which is illustrated in FIG. 3, and a second fluid supply mode. The fluid supply controller 310 may be switched between fluid supply modes by, for example, one or more solenoid 311 of the fluid supply controller 310. When the fluid supply controller 310 is in the first fluid supply mode, the fluid supply circuit 300 supplies working fluid to only the piston sides 324A, 324B of the fluid chambers 322A, 322B of the fluid cylinders 220A, 220B through the piston fluid ports 326A, 326B. In some embodiments, the fluid cylinders 220A, 220B are all fluidly coupled to the fluid supply circuit 300 in parallel, so a fluid pressure of working fluid supplied to the fluid chambers 322A, 322B from the fluid supply circuit 300 is generally the same for all of the fluid cylinders 220A, 220B.

Supplying the working fluid only to the piston sides 324A, 324B of the fluid chambers 322A, 322B urges the pistons 323A, 323B toward the respective density doors 210A, 210B, 210C to extend the cylinder rods 221A, 221B and move the density doors 210A, 210B, 210C together, *i.e.,* close the density doors 210A, 210B, 210C. Fluid on the rod sides 325A, 325B of the fluid chambers 322A, 322B, on the other hand, is urged out of the fluid chambers 322A, 322B to, for example, the fluid reservoir 301. As the density doors 210A, 210B, 210C move together, the bale pressing area BP decreases in size, causing the density doors 210A, 210B, 210C to exert a greater pressure on bales in the bale pressing area BP. Simultaneously, the exit space for the bale to move through decreases, which makes it harder for the bale to slide through to the rear (discharge chute) 32 of the baler. So, by applying more pressure on the sides of the formed bale, and simultaneously decreasing the exit space for the bale, will increase the density of the formed bales. In this respect, the first fluid supply mode may be referred to as a "high pressure" mode due to the relatively high pressure that the density doors 210A, 210B, 210C exert on the bales when the fluid supply controller 310 is in the first fluid supply mode. It should be appreciated that the pressure exerted on the bales in the bale pressing area BP by the density doors 210A, 210B, 210C correlates with the pressure of the working fluid that is supplied to only the piston sides 324A, 324B of the fluid chambers 322A, 322B, *i.e.*, a greater working fluid pressure supplied to only the piston sides 324A, 324B corresponds to a greater pressure exerted on the bales by the density doors 210A, 210B, 210C.

In some embodiments, the fluid supply controller 310 is a proportional relief valve defining a working range of fluid pressures that are supplied to the fluid cylinders 220A, 220B. The working range includes a minimum working fluid pressure, which is the minimum fluid pressure value that the fluid supply circuit 300 is configured to supply to the fluid cylinders 220A, 220B, and a maximum working fluid pressure, which is the maximum fluid pressure value that the fluid supply circuit 300 is configured to supply to the fluid cylinders 220A, 220B.

When the fluid supply controller 310 switches to the second fluid supply mode, the fluid supply circuit 300 supplies working fluid to both the piston sides 324A, 324B and the rod sides 325A, 325B of the fluid chambers 322A, 322B. The fluid pressure on the piston sides 324A, 324B of the fluid chambers 322A, 322B produces extension forces on the pistons 323A, 323B that urge the coupled cylinder rods 221A, 221B to extend, *i.e.,* close the density doors 210A, 210B, 210C. The fluid pressure on the rod sides 325, 325B of the fluid chambers 322A, 322B, on the other hand, produces retraction forces on the pistons 323A, 323B that urge the coupled cylinder rods 221A, 221B to retract, *i.e.,* open the density doors 210A, 210B, 210C. If the produced extension forces are greater than the retraction forces when the fluid supply controller 310 is in the second fluid supply state, the cylinder rods 221A, 221B will still extend to close the density doors 210A, 210B, 210C, but the net force extending the cylinder rods 221A, 221B will be equal to the extension forces minus the retraction forces. If, however, the produced retraction forces are greater than the extension forces, the cylinder rods 221A, 221B will retract to open the density doors 210A, 210B, 210C. In this sense, the fluid cylinders 220A, 220B are double-acting fluid cylinders that can be supplied with working fluid pressure on either side 324A, 324B, 325A, 325B of the pistons 323A, 323B to control extension and retraction of the cylinder rods 221A, 221B.

In some embodiments, such as the illustrated embodiment, the fluid supply circuit 300 is configured to supply working fluid to both the piston sides 324A, 324B and the rod sides 325A, 325B of the fluid chambers 322A, 322B at a same fluid pressure when the fluid supply controller 310 is in the second fluid supply mode, *i.e.,* the fluid pressure on the piston side 324A, 324B is the same as the fluid pressure on the rod side 325A, 325B of the fluid chambers 322A, 322B. Even though the fluid pressures on the sides 324A, 324B, 325A, 325B may be equal, the cylinder rods 221A, 221B will still be urged to extend when the fluid supply controller 310 is in the second fluid supply mode. This is due to the cylinder rods 221A, 221B, which are on the rod sides 325A, 325B of the fluid chambers 322A, 322B, being coupled to the pistons 323A, 323B. The cylinder rods 221A, 221B cover surface area of the pistons 323A, 323B on the rod sides 325A, 325B so the retraction forces exerted on the pistons 323A, 323B by the working fluid supplied to the rod sides 325A, 325B are still less than the extension forces exerted on the pistons 323A, 323B by the working fluid supplied to the piston sides 324A, 324B. However, the net extension forces that urge the cylinder rods 221A, 221B to extend and close the density doors 210A, 210B, 210C will be relatively small compared to the extension force produced when the fluid supply controller 310 is in the first fluid supply mode. The net extension forces on the pistons 323A, 323B when the fluid supply controller 310 is in the second fluid supply mode may be, for example, equal to the product of the working fluid pressure supplied to the fluid cylinders 220A, 220B and a surface area of the pistons 323A, 323B covered by the cylinder rods 221A, 221B. Thus, while the cylinder rods 221A, 221B will be urged to extend when the fluid supply controller 310 is in the first fluid supply mode and the second fluid supply mode, the net extension force will be less when the fluid supply controller 310 is in the second fluid supply mode so the density doors 210A, 210B, 210C will exert a second, lower pressure on bales in the bale pressing area BP. In this respect, the second fluid supply mode may be referred to as a *"low pressure"* mode due to the relatively low pressure exerted on the bale by the density doors 210A, 210B, 210C in the bale pressing area BP despite the supplied fluid pressure from the fluid supply circuit 300 being the same as when the fluid supply controller 310 is in the first fluid supply mode (*"high pressure"* mode).

From the foregoing, it should be appreciated that configuring the fluid cylinders 220A, 220B as double-acting fluid cylinders that are coupled to a fluid supply controller 310 with different fluid supply modes allows the density doors 210A, 210B, 210C to exert a wide range of exerted pressures on bales in the bale pressing area BP. For example, when the fluid supply controller 310 is in the first fluid supply mode, a first pressure exerted by the density doors 210A, 210B, 210C on the bale can be in the working range of the fluid supply controller 310, such as between 1 MPa and 21 MPa. When the fluid supply controller 310 switches to the second fluid supply mode, a second pressure exerted by the density doors 210A, 210B, 210C on the bale can be less than the minimum working fluid pressure value of the fluid supply controller 310, *i.e.,* lower than the first pressure, due to counteracting forces produced in the fluid chambers 322A, 322B. The second pressure exerted by the density doors 210A, 210B, 210C on the bale may be, for example, 2 MPa, which is equal to 20 bar. The density doors 210A, 210B, 210C exerting a pressure below the minimum working fluid pressure value of the fluid supply controller 310 may be desirable when, for example, the baled crop material is wet crop silage or other crop material that does not require, or is harmed by, high baling density.

In some embodiments the fluid supply controller 310 is switchable to a third fluid supply mode. The fluid supply circuit 300 is configured to supply working fluid to only the rod sides 325A, 325B of the fluid chambers 322A, 322B when the fluid supply controller 310 is in the third fluid supply mode. Thus, the cylinder rods 221A, 221B are urged to retract, without a significant counteracting extension force, when the fluid supply controller 310 is in the third fluid supply mode to fully open the density doors 210A, 210B, 210C and create a maximum size of the bale pressing area BP.

In some embodiments the fluid supply controller 310 is also switchable to a fourth fluid supply mode. When the fluid supply controller 310 is in the fourth fluid supply mode, the fluid supply circuit 300 is configured to connect both the rod sides 325A, 325B and the piston sides 324A, 324B of the fluid chambers 322A, 322B such that fluid can flow out of both sides of the fluid chambers 322A, 322B, for example into the fluid reservoir 301. In this way, pressurised fluid is not provided to either the rod sides 325A, 325B or the piston sides 324A, 324B of the fluid chambers 322A, 322B.

It should be appreciated that while the fluid supply controller 310 is described as having a *"first"* fluid supply mode, a *"second"* fluid supply mode, a *"third"* fluid supply mode, and a *"fourth"* fluid supply mode, the *"first", "second", "third"* and *"fourth"* designations do not refer to a specific sequence of the supply modes. In other words, the fluid supply controller 310 may be switched from the first fluid supply mode to the third fluid supply mode, and vice versa, without first being switched to the second fluid supply mode in accordance with the present invention.

In the example of Figure 3A, the fluid supply circuit 300 includes a first pump 302A and a second pump 302B. The first and second pumps 302A, 302B can provide fluid at different flow rates. For instance, the second pump 302B can provide fluid at a higher flow rate than the first pump 302A. The first pump 302A can be suitable for providing fluid during normal operation. The second pump 302B can be used to provide fluid, at the higher flow rate, if a quick adjustment of the position of the pistons 323A, 323B in the cylinders 220A, 220B is required. The spool valve 307 in this example is used to direct fluid from either the first pump 302A (having a relatively low flow rate) or the second pump 302B (having a relatively high flow rate) to the downstream components of the fluid supply circuit 300 and ultimately the cylinders 220A, 220B. For instance, a controller (not shown) can provide a control signal to the spool valve 307 such that either the first pump 302A or the second pump 302B provides fluid to the cylinders 220A, 220B. In this way, a plurality of pumps can respectively pressurize fluid such that it is provided at a plurality of different flow rates, and one or more valves can selectively connect one of the plurality of pumps to at least one hydraulic cylinder.

Figure 3B illustrates an alternative implementation of part of the fluid supply circuit 300 of Figure 3A. In Figure 3B, the fluid supply controller is implemented as two proportional relief valves. In this way, a first proportional relief valve 310a and a second proportional relief valve 310b can be controlled in order to provide the four fluid supply modes that are described above. The circuit of Figure 3B may also include two manual pressure relief valves, two pressure control modules and two manually operated latch valves, that provide the same functionality as the corresponding components in Figure 3A.

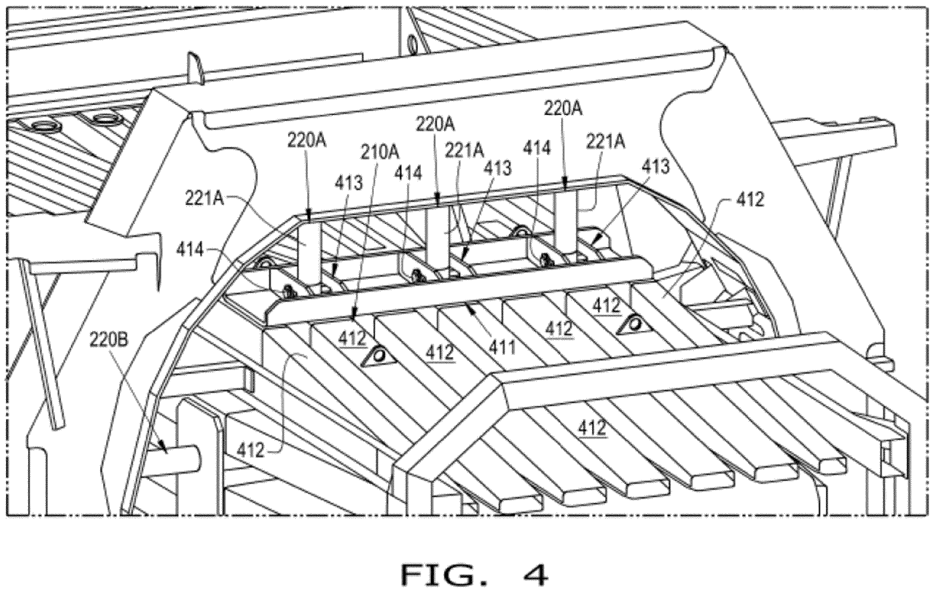

Referring now to Figure 4, it is illustrated how in one possible embodiment the fluid cylinders 220A move the top density door 210A. As can be seen, the top density door 210A may include a U-shaped channel 411 that is connected to girders 412 of the top density door 210A. The cylinder rods 221A of the fluid cylinders 220A may each be coupled to a fastening region 413 of the U-shaped channel 411 by fasteners such as, for example, bolts 414. By coupling the cylinder rods 221A of the fluid cylinders 220A to the U-shaped channel 411 via the bolts 414, extension and retraction of the cylinder rods 221A can move the top density door 210A to adjust the size of the bale pressing area BP.

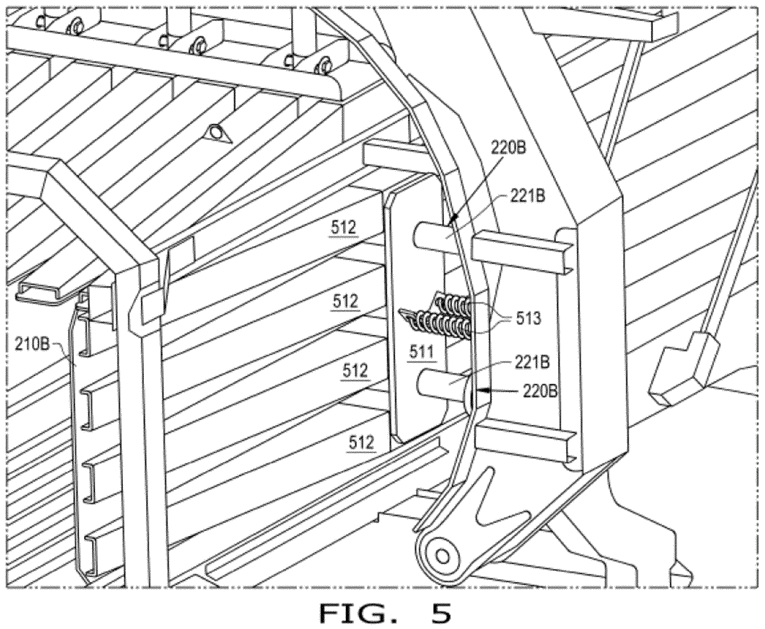

Referring now to Figure 5, it is illustrated how the fluid cylinders 220B move one of the side density doors, such as the side density door 210B. In the illustrated embodiment, a clearance between the side density door 210B and surrounding elements is not great enough to allow attachment of a U-shaped channel for connecting the fluid cylinders 220B to the side density door 210B by a fastener. Instead, the side density door 210B includes a bearing plate 511, which may be attached to girders 512 of the side density door 210B. The cylinder rods 221B of the fluid cylinders 220B bear on the bearing plate 511 so extension of the cylinder rods 221B moves the side density door 210B toward the other side density door 210C to decrease the bale pressing area BP. However, the cylinder rods 221B of the fluid cylinders 220B are not fastened to the bearing plate 511, so retraction of the cylinder rods 221B does not tend to retract the side density door 210B. In order to retract the side density door 210B to open the side density door 210B, one or more spring 513, illustrated as a pair of tension springs, is coupled to the side density door 210B, such as to the bearing plate 511. When the cylinder rods 221B are urged to extend, such as when the fluid supply controller 310 is in the first fluid supply mode or the second fluid supply mode, the cylinder rods 221B overcome retraction forces of the tension springs 513 to extend and push on the bearing plate 511 to move the side density door 210B. When the cylinder rods 221B are urged to retract, such as when the fluid supply controller 310 is in the third fluid supply mode, the cylinder rods 221B retract. The retracted cylinder rods 221B no longer overcome the retraction forces of the tension springs 513 acting on the side density door 210B, allowing the tension springs 513 to move and open the side density door 210B. Thus, the cylinder rods 221B can close the side density door 210B while the tension springs 513 can open the side density door 210B, allowing both closing and opening movements of the side density door 210B in an area with little clearance between elements. It should be appreciated that while the manner of moving side density door 210B by fluid cylinders 220B and tension springs 513 is illustrated in Figure 5, the other side density door 210C may be moved by fluid cylinders 220B and tension springs 513 in a similar manner.

A similar system as used to move the top density door 210A can be used to move the side density doors 210B and 210C. Likewise, a similar system as used to move the side doors 210B and 210C can also be used to move the top density door 210A.

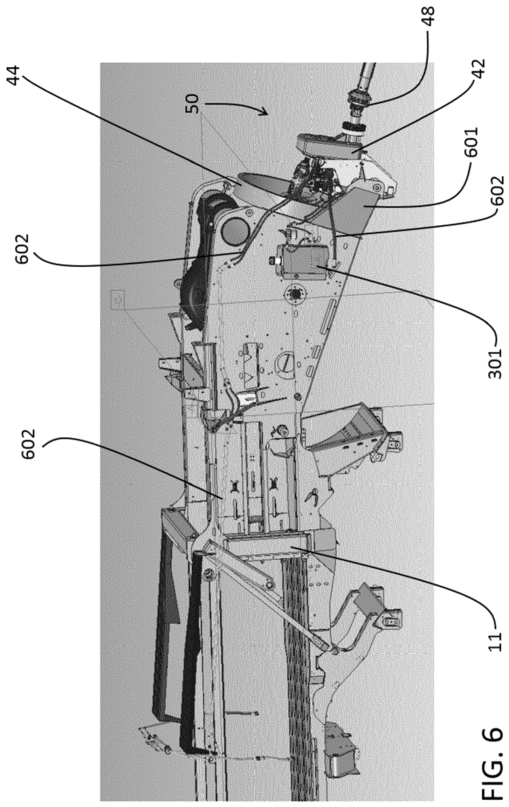

Figure 6 is a perspective view showing a chassis or frame 11 that is similar to chassis 11 of Figure 1, and by omitting for clarity numerous parts of the baler 10 helps to illustrate the technical problem addressed by embodiments described herein.

The frame 11 of Figure 6 differs slightly from that of Figure 1 because the arrangement of the driveline 50 is not the same as in Figure 1. In particular the gearbox 42 is of a different design, and in a different position, than in Figure 1. However when broadly considered the functions of the frame 11 and driveline 50 are identical or similar as between Figures 1 and 6.

In Figure 6 one or more valves such as valves 305, 306, 307 and 310 (not shown) are supported in a valve mounting 601 that is connected as part of a fluid power (e.g. hydraulic) circuit such as circuit 300 illustrated in detail in Figure 3A. The circuit includes a number of hydraulic fluid hoses 602 that interconnect the functional parts of the circuit 300 and in particular supply fluid to the cylinders 220A, 220B described above.

The valve mounting 601 in the illustrated embodiment is a block of a rigid material such as a steel or another metal alloy. The various valves may be fixed to the valve mounting 601 and/or may be contained inside it, the primary requirement being for a support that rigidly mounts the valves in a manner resisting the effects of fluid pressure in the hoses 602 that tend to twist or otherwise move the valves during operation. However the valve mounting may be embodied otherwise than as a block of material as illustrated.

In Figure 6 the valve mounting is secured to the frame 11 very close to its forwardmost point, adjacent the flywheel 44. Such positioning of the valve mounting 601 spaced longitudinally along the frame 11 from the cylinders 220A, 220B is also indicated schematically in Figure 3A by the illustrating the valves 305, 306, 307, 310 as displaced laterally from the cylinders 220A, 220B.

The inventors have identified that such positioning of the valve mounting, and hence the valves, at or near the forwardmost point of the frame 11 gives rise to a problem of variability of the pressure of fluid supplied to the cylinders 220A, 220B. Also as explained the cylinders 220A, 220B being double-acting cylinders are sensitive to such pressure variations and perform sub-optimally when they occur.

Additionally the positioning of the valve mounting 601 some distance from the cylinders 220A, 220B means that it also is some distance from any pressure sensors provided in the circuit 300. Such pressure sensors typically are present in order to provide feedback control in relation to density door force commands as may be input using one or more control interfaces such as buttons, levers, dials or touchscreen icons forming part of the combination of the towing tractor and the baling machine 10. If as illustrated in Figure 6 the valve mounting is located some distance from the sensors the reaction time of the circuit in responding to commands can be unacceptably slow.

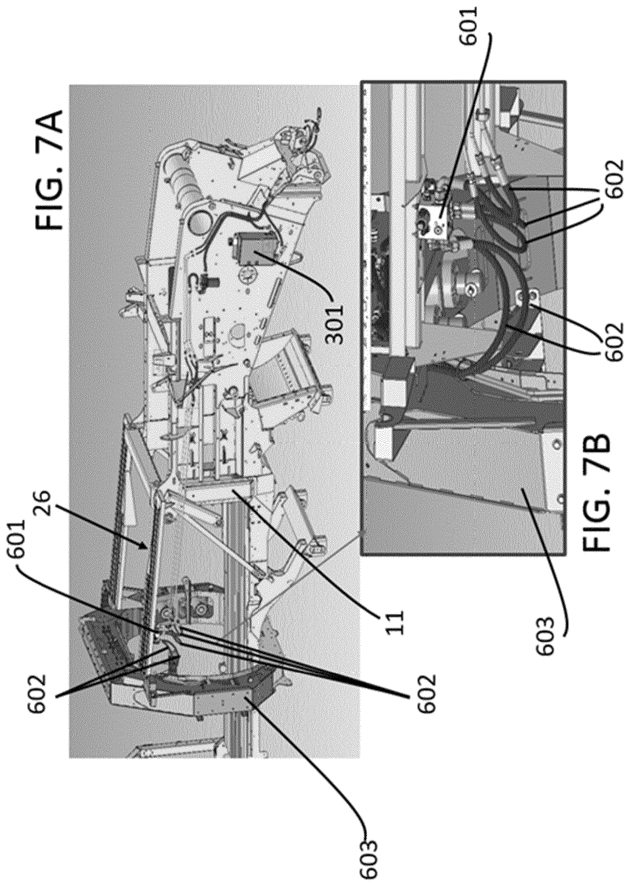

Figures 7A and 7B illustrate a solution to these problems in accordance with the invention as disclosed herein. In Figures 7A and 7B the valve mounting 601 is secured to the frame 11 at a location much closer to the cylinders 220A, 220B. This surprisingly has been found to reduce or eliminate the pressure variations that arise in the Figure 6 arrangement, and provides the further benefit of reduced circuit reaction times resulting from proximity of the valve mounting to any pressure sensors forming part of the circuit 300.

In more detail, the inventors have found that beneficial performance improvements result from positioning the valve mounting between the front and rear of the bale-forming chamber 26. The front and rear of the bale-forming chamber 26 are herein defined with reference to the inlet 104 and outlet 32 of the bale-forming chamber but this is purely for ease of description. Other ways of defining the front and rear of the bale-forming chamber 26 are possible within the scope of this disclosure.

The sense of the valve mounting 601 lying between the front and rear of the bale-forming chamber is determined with reference to the longitudinal extent (i.e. the front-rear dimension) of the bale-forming chamber 26. The height of the valve mounting in the baling machine 10 is of lesser relevance than its front-rear position to the generation of performance improvements as described herein.

In the illustrated embodiment of Figures 7A and 7B the baling machine 10 includes a rigid annular structure 603, referred to herein as a density ring, that together with the rigid, stationary bottom floor 201C encircles the bale-forming chamber at the transition between fixed chamber walls and moveable density doors 210A and 210B. The moveable density doors 210A, 210B are pivotably secured at their front ends to the density ring 603 in order to provide for the movement options described above.

The valve mounting 601 in the preferred embodiment is secured to the frame 11 at a location a short distance forwardly of the density ring 603 and hence a short distance forwardly of the in-use front ends of the density doors 210A, 210B.

Other locations of the valve mounting are possible in embodiments of the invention, although it is preferred that the valve mounting is located (as measured in the aforesaid front-rear direction) no more than approximately 1.5m from the cylinders 220A, 220B.

The valve mounting 601 supports the one or more sensors described above.

Various means of securing the sensors will occur to the person of skill in the art, as will means of securing the valve mounting 601 in position close to the cylinders 220A, 220B. Such means include but are not limited to screws, nut and bolt combinations, welds and adhesives. Combinations of securing means are possible.

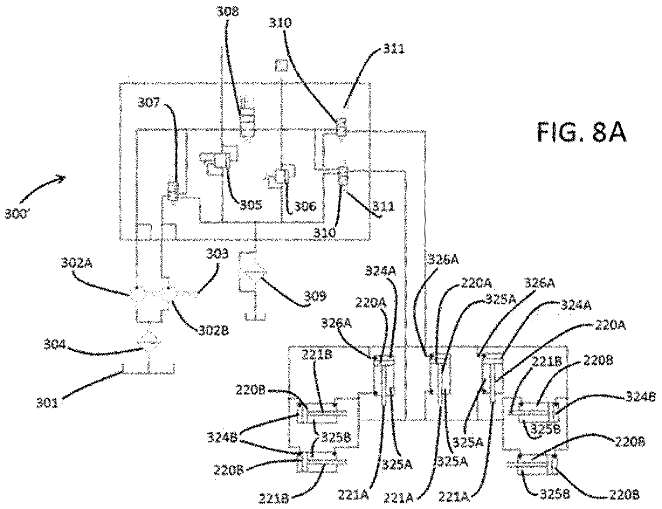

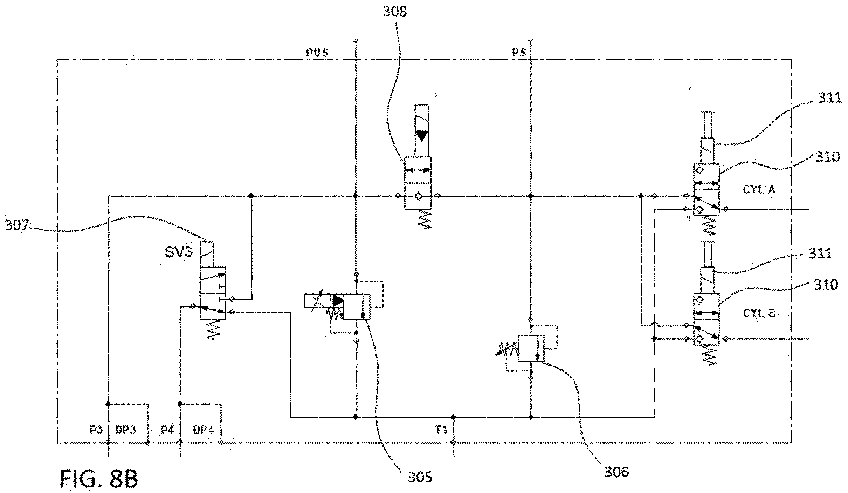

Figure 8A indicates in schematic form the fluid power circuit 300'. Figure 8B is a zoomed-in view of the fluid power circuit 300' that illustrates further details of various components of this embodiment of the circuit. These drawings illustrate the fluid power circuit 300' in a manner illustrating the proximity of the valve mounting 601 to the cylinders 220A, 220B. In Figure 8A this is achieved by illustrating the valves 305, 306, 307, 310 in a location above the cylinders 220A, 220B instead of laterally displaced therefrom as shown in Figure 3A. In almost all other respects the circuit 300' of Figure 8A is the same as circuit 300 of Figure 3A.

As explained in embodiments as defined herein the invention beneficially ameliorates or eliminates sub-optimal performance of the double-acting cylinders 220A, 220B. This may be demonstrated e.g. by plotting the outputs of one or more pressure sensors forming part of the circuit 300' against data from counterpart sensors in the circuit 300.

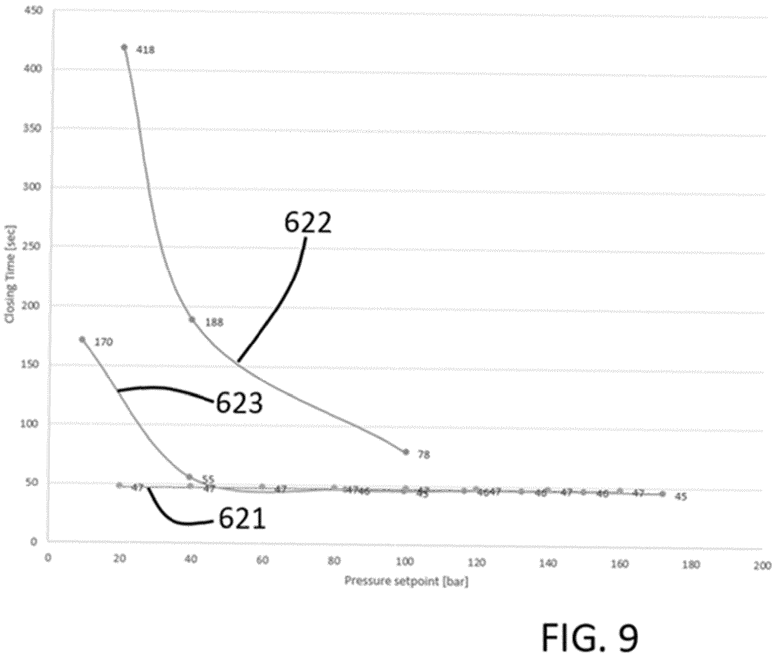

Figure 9 illustrates a further advantage of the invention, in terms of reaction times. Figure 9 plots the reaction time against the setpoint pressure in an example cylinder 220A, 220B as detected by one of the aforesaid pressure sensors. Plot line 621 represents a theoretical cylinder reaction time. Plot line 622 plots sensor outputs in the circuit 300 of Figure 3A and shows that, especially when low pressures are considered, the distance of the valve mounting 601 from the sensors induces a significant latency meaning in turn the overall time taken to adjust the pressures applied by the density doors is lengthy, potentially unacceptably so.

In contrast plot line 623, measured in the circuit 300' of Figure 8, shows a significantly quicker cylinder reaction as a result of proximity of the valve mounting 601 to the cylinders 220A, 220B and the pressure sensors.

An optional refinement of the circuits 300 and 300' is the presence of latch valve 308, which may be manually operable or electrically operable, optionally with a manual override.

Valve 308 may be embodied as a manually operated ball valve (or a valve of another design, as would occur to the person of skill in the art) including a latch for selectively latching it in a closed configuration that prevents the flow of fluid in the circuit. Such a valve may be activated to prevent the flow of fluid in the circuit 300, 300' e.g. when the baling machine 10 is stationary and it is intended to depower the driveline 50 with the result that the pump motor 303 in hydraulic circuit 300/300' is halted.

In such a situation ordinarily the pressure of fluid in the circuit 300 would be exhausted to the reservoir 301. Activation of the valve 308 *"locks"* the circuit in a pressurized state. As a result when baling operations are resumed there is no need to re-pressurise the circuit 300/300', with concomitant savings in time and energy overhead.

The valve 308 may be provided with a solenoid-released latch that is arranged to release the valve e.g. when it is detected that the driveline is reconnected following depowering. One or more sensors and associated processing equipment may be provided for the purpose of generating a valve release command signal that causes releasing of the latch.

Valve 308 may be supported in the valve mounting 601, but this is not a necessary requirement and the valve 301 may be positioned anywhere on the frame 11 that is convenient for effecting its operation.

Overall the invention provides significant performance advantages in a manner that is relatively simple to implement.

## Claims

1. A baling machine (10) comprising a frame (11) defining front and rear parts of the baling machine (10); at least one ground-engaging member secured to the frame (11) and permitting movement of the baling machine (10) over the ground; a pick-up (14) for picking up plant matter to be baled; one or more bale-forming chambers (26) supported by the frame (11) for receiving plant matter picked up by the pick-up (14) and forming it into bales; at least one bale density door (210A, 210B) that is movably secured relative to the frame (11) and is capable of pressing on a bale inside a said bale-forming chamber (26); at least one double-acting hydraulic cylinder (220A, 220B) secured relative to the frame (11) and the at least one bale density door (210A, 210B) such that extension and retraction of the hydraulic cylinder (220A, 220B) cause the bale density door (210A, 210B) to move respectively to increase and decrease pressure on a bale in the bale-forming chamber (26); a hydraulic circuit (300') that is connected to provide hydraulic power to cause extension and retraction of the at least one hydraulic cylinder (220A, 220B); and a hydraulic valve mounting (601) for supporting one or more valves (305, 306, 307, 310; 308) that control the flow of hydraulic fluid to the at least one hydraulic cylinder (220A, 220B), wherein the hydraulic valve mounting (601) is located between the front and rear of a said bale-forming chamber (26), the valve mounting (601) is located forwardly of the front end of the at least one bale density door (210A, 210B); and in that the valve mounting (601) supports a plurality of valves (305, 306, 307, 310; 308) forming part of the hydraulic circuit (300'),**characterised in that** the valve mounting (601) includes or supports one or more sensors of hydraulic fluid pressure in the hydraulic circuit (300, 300').

2. A baling machine (10) according to Claim 1 wherein the at least one bale density door (210A, 210B) is pivotably secured at its front end relative to the frame.

3. A baling machine (10) according to any preceding claim wherein the valve mounting (601) is located no more than 1.5m, measured in a front-rear direction, from the at least one hydraulic cylinder (220A, 220B).

4. A baling machine (10) according to any preceding claim wherein the valve mounting (601) includes a metal block defining or supporting on its inside the plurality of hydraulic valves (305, 306, 307, 310; 308).

5. A baling machine (10) according to any preceding claim including a plurality of bale density doors (210A, 210B) that are moveably secured relative to the frame (11) and that are each capable of pressing on a bale inside a said bale-forming chamber (26).

6. A baling machine (10) according to Claim 5 including a first, upper bale density door (210A) that acts downwardly on a bale in a said bale-forming chamber (26) from above and respective second and third side bale density doors (210B) that act on the bale respectively from the left and right sides when viewed from the rear of the baling machine (10) looking forwardly.

7. A baling machine (10) according to Claim 6 including three double-acting hydraulic cylinders (220A) that cause movement of the first bale density door and two pairs of double-acting hydraulic cylinders (220B) that cause movement of each of the second and third bale density doors respectively.

8. A baling machine (10) according to any preceding claim wherein the or each hydraulic cylinder (220A, 220B) includes a fluid-tight, elongate, hollow, cylindrical housing accommodating a piston (323A, 323B) that is moveable longitudinally in the housing and a rod (221A, 221B), secured to one side of the piston (323A, 323B) and protruding from the housing via an aperture whereby the piston (323A, 323B) defines a piston side (324A, 324B) and an oppositely disposed rod side (325A, 325B); and wherein the hydraulic circuit 300' is capable of causing the or each hydraulic cylinder (220A) to operate:
a. in a first mode in which fluid pressure acts entirely or predominantly on the piston side (324A, 324B) of the piston to effect movement of the piston (323A, 323B) in a first direction; or
b. in a second mode in which fluid pressure acts entirely or predominantly on the rod side (325A, 325B) of the piston (323A, 323B) to effect movement of the piston in a second direction opposite to the first direction; or
c. in a third mode in which fluid pressure acts equally on the piston (324A, 324B) and rod (325A, 325B) sides of the piston and an area difference resulting from the presence of the rod (221A, 221B) gives rise to a force causing the piston (323A, 323B) to move in the first direction; or
d. in a fourth mode in which fluid is allowed to flow out of fluid chambers (322A, 322B) on both the piston (324A, 324B) and rod (325A, 325B) sides of the piston (323A, 323B).

9. A baling machine (10) according to any preceding claim wherein the hydraulic circuit (300, 300') includes one or more pump (302A, 302B) for pressurising fluid and causing it to flow in the hydraulic circuit (300, 300'); and wherein the hydraulic circuit (300, 300') includes one or more valves (308) for preventing exhaustion of fluid pressure in the hydraulic circuit (300, 300') when operation of the one or more pump (302A, 302B) is interrupted.

10. A baling machine according to Claim 9 wherein the plurality of valves (308) is or includes a manually operated ball valve.

11. A baling machine according to any preceding claim, wherein:
the hydraulic circuit (300, 300') includes a plurality of pumps (302A, 302B) for respectively pressurising fluid such that it is provided at a plurality of different flow rates; and
one or more valves for selectively connecting one of the plurality of pumps to the at least one hydraulic cylinder (220A, 220B).

## Patentansprüche

1. Ballenpresse (10) mit
einem Rahmen (11), der vordere und hintere Abschnitte der Ballenpresse (10) definiert;
mindestens einem bodenbearbeitendes Element, das am Rahmen (11) befestigt ist und eine Bewegung der Ballenpresse (10) über den Boden ermöglicht;
einer Aufnahmevorrichtung (14) zum Aufnehmen von zu verpressendem Pflanzenmaterial;
einer oder mehreren Ballenkammern (26), die vom Rahmen (11) getragen sind und dazu eingerichtet sind, aufgenommenes Pflanzenmaterial aufzunehmen und zu Ballen zu formen;
mindestens einer Ballendrucktür (210A, 210B), die beweglich relativ zum Rahmen (11) befestigt und dazu eingerichtet ist, auf einen Ballen innerhalb einer Ballenkammer (26) zu drücken;
mindestens einem doppeltwirkenden Hydraulikzylinder (220A, 220B), der relativ zum Rahmen (11) und zur mindestens einen Ballendrucktür (210A, 210B) befestigt ist, sodass eine Aus- und Einfahrbewegung des Hydraulikzylinders (220A, 220B) die Ballendrucktür (210A, 210B) bewegt, um den Druck auf einen Ballen in der Ballenkammer (26) zu erhöhen bzw. zu verringern;
einem Hydraulikkreis (300'), der dazu eingerichtet ist, hydraulische Energie bereitzustellen, um die Aus- und Einfahrbewegung des mindestens einen Hydraulikzylinders (220A, 220B) zu bewirken;
einer Ventilhalterung (601) zum Tragen eines oder mehrerer Ventile (305, 306, 307, 310; 308), die den Fluss von Hydraulikflüssigkeit zu dem mindestens einen Hydraulikzylinder (220A, 220B) steuern, wobei die Ventilhalterung (601) zwischen der Vorder- und Rückseite einer Ballenkammer (26) angeordnet ist, die Ventilhalterung (601) vor dem vorderen Ende der mindestens einen Ballendrucktür (210A, 210B) positioniert ist und die Ventilhalterung (601) mehrere Ventile (305, 306, 307, 310; 308) trägt, die Teil des Hydraulikkreises (300') sind,
**dadurch gekennzeichnet, dass**
die Ventilhalterung (601) einen oder mehrere Sensoren zur Messung des Hydraulikflüssigkeitsdrucks im Hydraulikkreis (300, 300') umfasst oder trägt.

2. Ballenpresse (10) nach Anspruch 1, wobei die mindestens eine Ballendrucktür (210A, 210B) an ihrem vorderen Ende schwenkbar relativ zum Rahmen befestigt ist.

3. Ballenpresse (10) nach einem der vorhergehenden Ansprüche, wobei die Ventilhalterung (601) höchstens 1,5 m, gemessen in Vorwärts-Rückwärts-Richtung, vom mindestens einen Hydraulikzylinder (220A, 220B) entfernt angeordnet ist.

4. Ballenpresse (10) nach einem der vorhergehenden Ansprüche, wobei die Ventilhalterung (601) einen Metallblock umfasst, der die Vielzahl von Hydraulikventilen (305, 306, 307, 310; 308) definiert oder trägt.

5. Ballenpresse (10) nach einem der vorhergehenden Ansprüche, die mehrere Ballendrucktüren (210A, 210B) umfasst, die beweglich relativ zum Rahmen (11) befestigt und jeweils dazu eingerichtet sind, auf einen Ballen innerhalb einer Ballenkammer (26) zu drücken.

6. Ballenpresse (10) nach Anspruch 5, die eine erste, obere Ballendrucktür (210A), die von oben auf einen Ballen in einer Ballenkammer (26) wirkt, sowie jeweils eine zweite und dritte seitliche Ballendrucktür (210B) umfasst, die jeweils von der linken und rechten Seite, aus der Rückansicht nach vorne blickend, auf den Ballen wirken.

7. Ballenpresse (10) nach Anspruch 6, die drei doppeltwirkende Hydraulikzylinder (220A) zur Bewegung der ersten Ballendrucktür und jeweils zwei Paare von doppeltwirkenden Hydraulikzylindern (220B) zur Bewegung der zweiten und dritten Ballendrucktür umfasst.

8. Ballenpresse (10) nach einem der vorhergehenden Ansprüche, wobei der oder jeder Hydraulikzylinder (220A, 220B) ein flüssigkeitsdichtes, langgestrecktes, hohles, zylindrisches Gehäuse aufweist, in dem ein Kolben (323A, 323B) längsbeweglich untergebracht ist, sowie eine Stange (221A, 221B), die an einer Seite des Kolbens (323A, 323B) befestigt ist und durch eine Öffnung aus dem Gehäuse herausragt, wobei der Kolben (323A, 323B) eine Kolbenseite (324A, 324B) und eine gegenüberliegende Stangenseite (325A, 325B) definiert; und wobei der Hydraulikkreis (300') dazu eingerichtet ist, den oder jeden Hydraulikzylinder (220A) wie folgt zu betreiben:
a. in einem ersten Modus, in dem der Flüssigkeitsdruck vollständig oder überwiegend auf die Kolbenseite (324A, 324B) wirkt, um den Kolben (323A, 323B) in eine erste Richtung zu bewegen; oder
b. in einem zweiten Modus, in dem der Flüssigkeitsdruck vollständig oder überwiegend auf die Stangenseite (325A, 325B) wirkt, um den Kolben (323A, 323B) in eine zweite Richtung entgegen der ersten Richtung zu bewegen; oder
c. in einem dritten Modus, in dem der Flüssigkeitsdruck gleichmäßig auf die Kolben- (324A, 324B) und Stangenseite (325A, 325B) wirkt und aufgrund der Flächenunterschiede infolge der Anwesenheit der Stange (221A, 221B) eine Kraft entsteht, die den Kolben (323A, 323B) in die erste Richtung bewegt; oder
d. in einem vierten Modus, in dem die Hydraulikflüssigkeit aus den Flüssigkeitskammern (322A, 322B) sowohl auf der Kolben- (324A, 324B) als auch auf der Stangenseite (325A, 325B) abfließen kann.

9. Ballenpresse (10) nach einem der vorhergehenden Ansprüche, wobei der Hydraulikkreis (300, 300') eine oder mehrere Pumpen (302A, 302B) umfasst, die dazu eingerichtet sind, Flüssigkeit zu unter Druck zu setzen und im Hydraulickreis (300, 300') zirkulieren zu lassen; und wobei der Hydraulikkreis (300, 300') ein oder mehrere Ventile (308) umfasst, die verhindern, dass der Druckverlust im Hydraulikkreis (300, 300') beim Unterbrechen des Betriebs der einen oder mehreren Pumpen (302A, 302B) eintritt.

10. Ballenpresse (10) nach Anspruch 9, wobei die Mehrzahl der Ventile (308) ein manuell betätigtes Kugelventil umfasst.

11. Ballenpresse (10) nach einem der vorhergehenden Ansprüche, wobei
der Hydraulikkreis (300, 300') eine Mehrzahl von Pumpen (302A, 302B) umfasst, die jeweils Flüssigkeit mit unterschiedlichen Durchflussraten unter Druck setzen; und
ein oder mehrere Ventile vorhanden sind, um wahlweise eine der mehreren Pumpen mit dem mindestens einen Hydraulikzylinder (220A, 220B) zu verbinden.

## Revendications

1. Une presse à balles (10) comprenant un châssis (11) définissant les parties avant et arrière de la presse à balles (10) ; au moins un élément d'engagement avec le sol fixé au châssis (11) et permettant le déplacement de la presse à balles (10) sur le sol ; un ramasseur (14) pour ramasser les matières végétales à compacter en balles ; une ou plusieurs chambres de compression de balles (26) soutenues par le châssis (11) pour recevoir les matières végétales ramassées par le ramasseur (14) et les compacter en balles ; au moins une porte de densité de balle (210A, 210B) fixée de manière mobile par rapport au châssis (11) et capable d'exercer une pression sur une balle à l'intérieur de ladite chambre de compression de balles (26) ; au moins un vérin hydraulique à double effet (220A, 220B) fixé par rapport au châssis (11) et à l'au moins une porte de densité de balle (210A, 210B) de sorte que l'extension et la rétraction du vérin hydraulique (220A, 220B) entraînent le déplacement de la porte de densité de balle (210A, 210B) afin respectivement d'augmenter et de réduire la pression sur une balle dans la chambre de compression de balles (26) ; un circuit hydraulique (300') raccordé pour fournir l'énergie hydraulique nécessaire à l'extension et la rétraction de l'au moins un vérin hydraulique (220A, 220B) ; et un support de valve hydraulique (601) pour soutenir une ou plusieurs vannes (305, 306, 307, 310 ; 308) qui contrôlent le flux de fluide hydraulique vers l'au moins un vérin hydraulique (220A, 220B), dans lequel le support de valve hydraulique (601) est situé entre l'avant et l'arrière de ladite chambre de compression de balles (26), le support de valve (601) est situé à l'avant de l'extrémité avant de l'au moins une porte de densité de balle (210A, 210B) ; et en ce que le support de valve (601) soutient une pluralité de vannes (305, 306, 307, 310 ; 308) faisant partie du circuit hydraulique (300'), **caractérisée en ce que** le support de valve (601) inclut ou soutient un ou plusieurs capteurs de pression de fluide hydraulique dans le circuit hydraulique (300, 300').

2. Une presse à balles (10) selon la revendication 1, dans laquelle l'au moins une porte de densité de balle (210A, 210B) est fixée de manière pivotante à son extrémité avant par rapport au châssis.

3. Une presse à balles (10) selon l'une quelconque des revendications précédentes, dans laquelle le support de valve (601) est situé à une distance maximale de 1,5 m, mesurée dans un sens avant-arrière, de l'au moins un vérin hydraulique (220A, 220B).

4. Une presse à balles (10) selon l'une quelconque des revendications précédentes dans laquelle le support de valve (601) comprend un bloc en métal définissant ou soutenant à l'intérieur la pluralité de vannes hydrauliques (305, 306, 307, 310 ; 308).

5. Une presse à balles (10) selon l'une quelconque des revendications précédentes incluant une pluralité de portes de densité de balle (210A, 210B) qui sont fixées de manière mobile par rapport au châssis (11) et qui sont chacune capables d'exercer une pression sur une balle à l'intérieur d'une chambre de compression de balles (26).

6. Une presse à balles (10) selon la revendication 5 incluant une première porte de densité de balle supérieure (210A) qui agit vers le bas sur une balle dans ladite chambre de compression de balles (26) à partir du haut et respectivement une deuxième et une troisième porte de densité de balle latérale (210B) qui agissent sur la balle respectivement à partir des côtés gauche et droit lorsqu'elles sont vues de l'arrière de la presse à balles (10) en regardant en direction de l'avant.

7. Une presse à balles (10) selon la revendication 6 incluant trois vérins hydrauliques à double effet (220A) qui provoquent le déplacement de la première porte de densité de balle et deux paires de vérins hydrauliques à double effet (220B) qui provoquent le déplacement de respectivement chacune de la deuxième et la troisième porte de densité de balle.

8. Une presse à balles (10) selon l'une quelconque des revendications précédentes dans laquelle le ou chaque vérin hydraulique (220A, 220B) inclut un boîtier cylindrique allongé, creux, étanche aux fluides, accueillant un piston (323A, 323B) mobile de manière longitudinale dans le boîtier et une tige (221A, 221B), fixée sur un côté du piston (323A, 323B) et faisant saillie du boîtier par une ouverture dans lequel le piston (323A, 323B) définit un côté piston (324A, 324B) et un côté tige (325A, 325B) disposé de manière opposée ; et dans lequel le circuit hydraulique (300') est capable de faire fonctionner le ou chaque vérin hydraulique (220A) :
a. dans un premier mode dans lequel la pression du fluide agit intégralement ou principalement sur le côté piston (324A, 324B) du piston pour effectuer le déplacement du piston (323A, 323B) dans une première direction ; ou
b. dans un deuxième mode dans lequel la pression du fluide agit intégralement ou principalement sur le côté tige (325A, 325B) du piston (323A, 323B) pour effectuer le déplacement du piston dans une seconde direction opposée à la première direction ; ou
c. dans un troisième mode dans lequel la pression du fluide agit de manière égale sur le côté piston (324A, 324B) et le côté tige (325A, 325B) du piston et une différence de surface résultant de la présence de la tige (221A, 221B) donne lieu à une force entraînant le déplacement du piston (323A, 323B) dans la première direction ; ou
d. dans un quatrième mode dans lequel le fluide est autorisé à s'écouler des chambres à fluide (322A, 322B) à la fois du côté piston (324A, 324B) et du côté tige (325A, 325B) du piston (323A, 323B).

9. Une presse à balles (10) selon l'une quelconque des revendications précédentes dans laquelle le circuit hydraulique (300, 300') inclut une ou plusieurs pompes (302A, 302B) pour mettre le fluide sous pression et le faire circuler dans le circuit hydraulique (300, 300') ; et dans laquelle le circuit hydraulique (300, 300') inclut une ou plusieurs vannes (308) pour empêcher l'épuisement de la pression du fluide dans le circuit hydraulique (300, 300') lorsque le fonctionnement de la ou des pompes (302A, 302B) est interrompu.

10. Une presse à balles selon la revendication 9, dans laquelle la pluralité de vannes (308) est ou inclut une soupape à bille à commande manuelle.

11. Une presse à balles selon l'une quelconque des revendications
précédentes, dans laquelle :
le circuit hydraulique (300, 300') comprend une pluralité de pompes (302A, 302B) pour respectivement mettre le fluide sous pression de manière à ce qu'il soit fourni à une pluralité de débits différents ; et
une ou plusieurs vannes pour raccorder sélectivement l'une parmi la pluralité de pompes à l'au moins un vérin hydraulique (220A, 220B).
